# EUROPÄISCHE PATENTANMELDUNG

(11) **EP 1 074 770 A2**
(43) Veröffentlichungstag der Anmeldung: **07.02.2001**
(21) Anmeldenummer: 00114890.7
(22) Anmeldetag: 12.07.2000
(51) Int. Cl.: F16K 17/08, F02M 25/07

(54) **Steuerventil**

(30) Priorität: 04.08.1999 DE 19936657
(71) Anmelder: Mannesmann VDO AG, 60388 Frankfurt am Main (DE)
(72) Erfinder: Bachnak, Nouhad, 60326 Frankfurt (DE)
(74) Vertreter: Klein, Thomas, Dipl.-Ing.

(57) **Zusammenfassung**

Ein Druckausgleichselement (8) für ein Steuerventil (3) zur Steuerung eines Überströmens eines Mediums von einem ersten Druckraum (1) in einen zweiten Druckraum (2) hat eine die Druckräume (1, 2) voneinander trennende Membran (9). Das Druckausgleichselement (8) gleicht auf einen Ventilkörper (5) des Steuerventils (3) einwirkende, durch Druckdifferenzen in den Druckräumen (1, 2) erzeugte Kräfte aus. Ein Überströmen eines Mediums von einem Druckraum (1) in den anderen Druckraum (2) erfolgt jedoch ausschließlich im Bereich des Steuerventils (3).

## Beschreibung

Die Erfindung betrifft ein Steuerventil zur Steuerung eines Überströmens eines Mediums von einem ersten Druckraum in einen zweiten, einen von einem Druck im ersten Druckraum abweichenden Druck aufweisenden Druckraum mit einem gegen einen Ventilsitz vorgespannten Ventilkörper, mit einer Steuereinrichtung zur Bewegung des Ventilkörpers und mit einem beweglichen, von der Druckdifferenz zwischen den Druckräumen beaufschlagten, mit dem Ventilkörper verbundenen Druckausgleichselement zum Ausgleich der auf den Ventilkörper wirkenden Druckkräfte.

Solche elektromagnetischen Steuerventile werden beispielsweise in Einrichtungen zur Abgasrückführung bei Brennkraftmaschinen heutiger Kraftfahrzeuge eingesetzt. Die Druckräume sind hierbei als Ansaugkanal und als Abgaskanal der Brennkraftmaschine ausgebildet. Bei solchen Einrichtungen zur Abgasrückführung wird ein Teilstrom von Abgas aus dem Abgaskanal abgezweigt und dem Ansaugkanal zugeführt. Hierdurch läßt sich der Stickstoffanteil im Abgas reduzieren. Das Verhältnis der zuzuführenden Abgasmenge zur Frischluftmenge ist abhängig von beispielsweise dem Lastzustand, den Temperaturen oder der Drehzahl der Brennkraftmaschine und wird durch die Steuerung des Ventilkörpers bestimmt. Für diese Steuerung hat die Steuereinrichtung beispielsweise einen pneumatischen, elektromagnetischen oder elektromotorischen Stellantrieb.

Um bei hohen Druckdifferenzen zwischen den Druckräumen besonders große Stellkräfte bei der Bewegung des Ventilkörpers zu vermeiden, ist aus der Praxis ein Steuerventil bekannt geworden, bei dem ein zweiter Ventilkörper als Druckausgleichselement ausgebildet ist. Die Ventilkörper sind auf einer gemeinsamen Ventilwelle befestigt und liegen in Grundstellung jeweils an einem Ventilsitz an. Mit dem Bereich zwischen den Ventilkörpern ist einer der Druckräume verbunden, während die Bereiche auf den voneinander abgewandten Seiten der Ventilkörper mit dem anderen Druckraum verbunden sind. Hierdurch wirken auf die Ventilwelle jeweils durch Druckdifferenzen in den Druckräumen erzeugte Kräfte, jedoch in entgegengesetzten Kraftrichtungen.

Nachteilig bei dem bekannten Steuerventil ist, daß die jeweiligen Abstände der Ventilkörper und der Ventilsitze besonders kleine Toleranzen benötigen. Zudem dichtet das Steuerventil beispielsweise bei einer Temperaturausdehnung der Ventilwelle oder einem Verschleiß der Ventilkörper und der Ventilsitze die Druckräume voneinander nicht zuverlässig ab. Ebenfalls führen unterschiedliche Ausdehnungen der Ventilkörper und der Ventilsitze zu Undichtigkeiten.

Der Erfindung liegt das Problem zugrunde, ein Steuerventil der eingangs genannten Art so zu gestalten, daß es keine kleinen Toleranzen benötigt und die Druckräume zuverlässig gegeneinander abdichtet.

Dieses Problem wird erfindungsgemäß dadurch gelöst, daß die Druckräume im Bereich des Druckausgleichselements gegeneinander abgedichtet sind.

Durch diese Gestaltung hat das erfindungsgemäße Steuerventil einen einzigen Ventilkörper. Der Ventilkörper und das Druckausgleichselement sind dank der Erfindung voneinander getrennt. Daher benötigt das erfindungsgemäße Steuerventil keine besonders kleinen Toleranzen. Eine Undichtigkeit des erfindungsgemäßen Steuerventils läßt sich daher einfach vermeiden. Deshalb ist das erfindungsgemäße Steuerventil insbesondere für den Einsatz in einer Einrichtung zur Abgasrückführung bei einer Brennkraftmaschine eines Kraftfahrzeuges geeignet.

Das Druckausgleichselement könnte beispielsweise ein in einem zwischen den Druckräumen angeordneten Zylinder verschieblicher Kolben sein. Das Druckausgleichselement dichtet die beiden Druckräume gemäß einer anderen vorteilhaften Weiterbildung der Erfindung zuverlässig gegeneinander ab, wenn das Druckausgleichselement eine Membran zur Trennung der Druckräume hat.

Das Druckausgleichselement gestaltet sich gemäß einer anderen vorteilhaften Weiterbildung der Erfindung konstruktiv besonders einfach, wenn eine zur Verstellung des Ventilkörpers ausgebildete Ventilwelle mit einem die Membran haltenden Teller verbunden ist.

Durch Strömungen innerhalb der Druckräume erzeugte Störungen des Druckausgleichselementes lassen sich gemäß einer anderen vorteilhaften Weiterbildung der Erfindung zuverlässig vermeiden, wenn das Druckausgleichselement zur Unterteilung eines Behälters in zwei Kammern gestaltet ist und wenn die erste Kammer mit dem ersten Druckraum und die zweite Kammer mit dem zweiten Druckraum verbunden ist.

Das erfindungsgemäße Steuerventil gestaltet sich besonders kompakt, wenn der Behälter auf der dem zweiten Druckraum gegenüberliegenden Seite des ersten Druckraums angeordnet ist und wenn ein Druckausgleichskanal zur Verbindung des zweiten Druckraums mit der zweiten Kammer gestaltet ist.

Eine besonders zuverlässige Abdichtung der Druckräume in Grundstellung des erfindungsgemäßen Steuerventils läßt sich einfach sicherstellen, wenn der Ventilkörper mittels eines Federelementes in Schließstellung rückstellbar ist. Das Federelement kann beispielsweise aus Federstahl gefertigt sein. Da das Federelement nur sehr schwache Rückstellkräfte übertragen muß, kann es auch aus einer Metallgedächtnislegierung bestehen.

Ein Gleichgewicht der auf den Ventilkörper und das Druckausgleichselement einwirkenden Kräfte läßt sich gemäß einer anderen vorteilhaften Weiterbildung der Erfindung einfach einstellen, wenn zwischen dem Ventilkörper und dem Druckausgleichselement ein Hebel angeordnet ist.

Die Erfindung läßt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig.1: eine Schnittdarstellung durch eine erste Ausführungsform eines erfindungsgemäßen Steuerventils im Längsschnitt,
- Fig.2: eine weitere Ausführungsform des erfindungsgemäßen Steuerventils im Längsschnitt,
- Fig.3: eine schematische Darstellung einer weiteren Ausführungsform des erfindungsgemäßen Steuerventils.

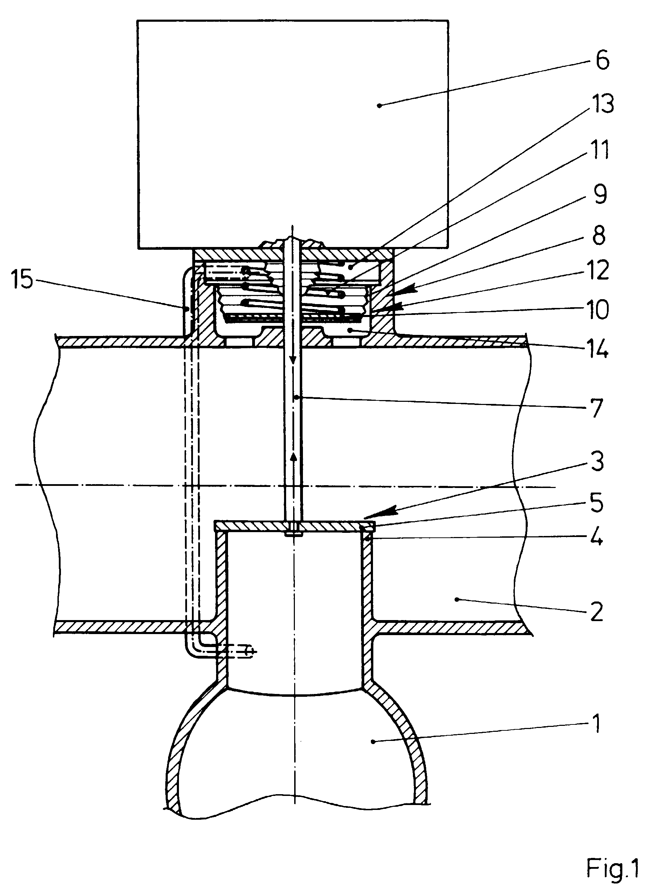

Figur 1 zeigt eine Einrichtung für eine Abgasrückführung einer Brennkraftmaschine eines Kraftfahrzeuges mit einem ersten, als Abgaskanal ausgebildeten Druckraum 1 und mit einem zweiten, als Ansaugkanal ausgebildeten Druckraum 2 im Längsschnitt. Ein Steuerventil 3 ermöglicht ein Überströmen von Abgas aus dem ersten Druckraum 1 in den zweiten Druckraum 2. Das Steuerventil 3 hat einen an einem Ventilsitz 4 anliegenden Ventilkörper 5 und eine Steuereinrichtung 6 zur Bewegung des Ventilkörpers 5 senkrecht zu dem Ventilsitz 4. Der Ventilkörper 5 ist über eine Ventilwelle 7 mit der Steuereinrichtung 6 verbunden. Die Steuereinrichtung 6 kann die Ventilwelle 7 beispielsweise mittels eines nicht dargestellten Elektromagneten verstellen. Damit läßt sich beispielsweise in Abhängigkeit der Drehzahl der Brennkraftmaschine, dem Lastzustand oder der Temperaturen eine Verbindung des als Abgaskanal ausgebildeten Druckraums 1 mit dem als Ansaugkanal ausgebildeten Druckraum 2 herstellen und Abgas mit Frischluft mischen.

An der Ventilwelle 7 ist ein Druckausgleichselement 8 mit einem eine Membran 9 halternden Teller 10 befestigt. Der Teller 10 wird von einem als Wendelfeder ausgebildeten Federelement 11 nach unten hin vorgespannt. Die Membran 9 ist in einem Behälter 12 angeordnet und unterteilt diesen in zwei Kammern 13, 14. Die Membran 9 ermöglicht eine Bewegung des Tellers 10 und damit der Ventilwelle 7 und trennt die in den Druckräumen 1, 2 strömenden Medien. Die erste Kammer 13 ist mit dem ersten Druckraum 1 und die zweite Kammer 14 über einen Druckausgleichskanal 15 mit dem zweiten Druckraum 2 verbunden. Das Druckausgleichselement 8 hat im wesentlichen dieselbe Querschnittsfläche wie der Ventilkörper 5, so daß eine Druckdifferenz der Kammern 13, 14 und damit der Druckräume 1, 2 über das Druckausgleichselement 8 dieselben Kräfte in die Ventilwelle 7 einleitet wie der Ventilkörper 5. Die Kräfte weisen dabei in entgegengesetzte Richtungen und heben sich damit auf. Zur Verdeutlichung sind in der Zeichnung für den Fall daß, in dem ersten Druckraum 1 ein geringerer Druck herrscht als in dem zweiten Druckraum 2, die auf den Ventilkörper 5 und den Teller 10 wirkenden Kräfte mit Pfeilen gekennzeichnet. Das Federelement 11 dient als Rückstellelement zur Halterung des Ventilkörpers 5 auf dem Ventilsitz 4 bei kraftloser Steuereinrichtung 6. Da die durch die Druckdifferenz zwischen den Druckräumen auf den Ventilkörper 5 wirkenden Kräfte von dem Druckausgleichselement 8 ausgeglichen werden, kann das Federelement 11 eine geringe Federkraft und eine besonders flache Federkennlinie aufweisen.

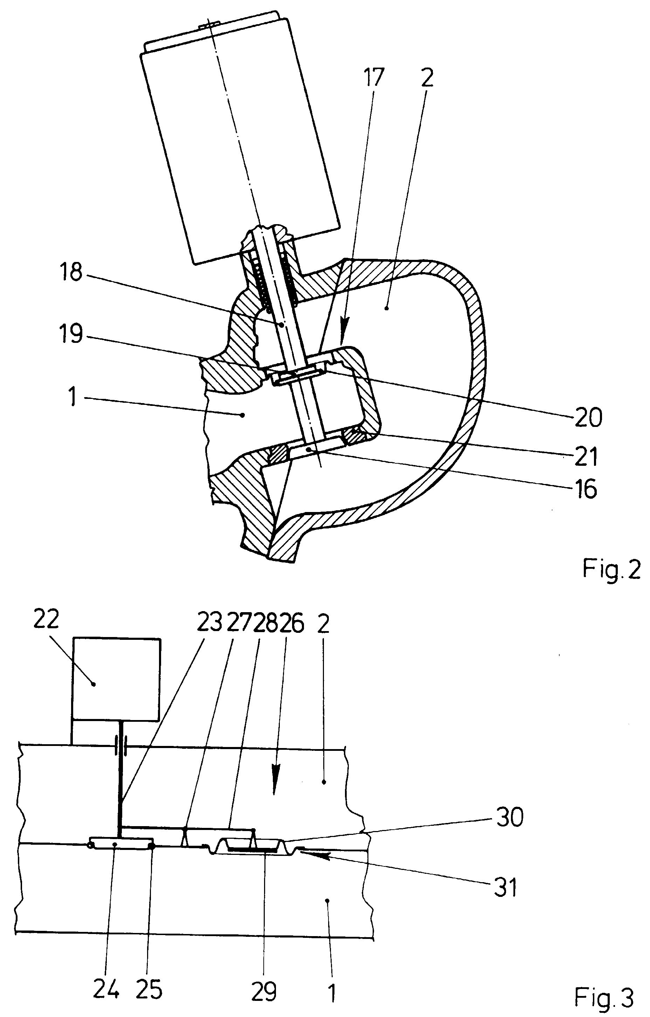

Figur 2 zeigt eine weitere Ausführungsform des Steuerventils. Hierbei wird ein Teilbereich des ersten Druckraums 1 von einem einen C-förmigen Querschnitt aufweisenden zweiten Druckraum 2 umschlossen. In den Schenkeln des zweiten Druckraums 2 sind ein Ventilkörper 16 und ein Druckausgleichselement 17 angeordnet. Das Druckausgleichselement 17 hat einen an einer Ventilwelle 18 befestigten Teller 19 und eine an dem Teller 19 befestigte Membran 20. Der Ventilkörper 16 ist ebenfalls an der Ventilwelle 18 befestigt und liegt in der eingezeichneten Stellung an einem Ventilsitz 21 an. In dieser Stellung des Ventilkörpers 16 sind die in den Druckräumen 1, 2 strömenden Medien voneinander getrennt. Wie bei dem Steuerventil aus Figur 1 heben sich auf die Ventilwelle 18 einwirkende, durch Druckdifferenz in den Druckräumen 1, 2 erzeugte Kräfte auf.

Figur 3 zeigt schematisch eine weitere Ausführungsform des Steuerventils. Die Druckräume 1, 2 sind hier als parallel zueinander angeordnete Kanäle ausgebildet. Das Steuerventil hat eine von einer Steuereinrichtung 22 verschiebbare Ventilwelle 23 und einen auf der Ventilwelle 23 befestigten Ventilkörper 24. Der Ventilkörper 24 ist in der eingezeichneten Stellung gegen einen Ventilsitz 25 vorgespannt. An der Ventilwelle 23 greift ein Hebel 28 an. Der Hebel 28 ist um ein Festlager 27 schwenkbar gelagert und verbindet die Ventilwelle 23 mit einem Druckausgleichselement 26. Das Druckausgleichselement 26 hat einen an dem Hebel 28 angelenkten Teller 29, der mittels einer Membran 30 in einer Öffnung 31 gehalten ist. Die Membran 30 dichtet die Öffnung 31 gegenüber dem Teller 29 ab.

## Patentansprüche

1. Steuerventil zur Steuerung eines Überströmens eines Mediums von einem ersten Druckraum in einen zweiten, einen von einem Druck im ersten Druckraum abweichenden Druck aufweisenden Druckraum mit einem gegen einen Ventilsitz vorgespannten Ventilkörper, mit einer Steuereinrichtung zur Bewegung des Ventilkörpers und mit einem beweglichen, von der Druckdifferenz zwischen den Druckräumen beaufschlagten, mit dem Ventilkörper verbundenen Druckausgleichselement zum Ausgleich der auf den Ventilkörper wirkenden Druckkräfte, **dadurch gekennzeichnet**, daß die Druckräume (1, 2) im Bereich des Druckausgleichselements (8, 17, 26) gegeneinander abgedihtet sind.

2. Steuerventil nach Anspruch 1, **dadurch gekennzeichnet**, daß das Druckausgleichselement (8, 17, 26) eine Membran (9, 20, 30) zur Trennung der Druckräume (1, 2) hat.

3. Steuerventil nach Anspruch 1 oder 2, **dadurch gekennzeichnet**, daß eine zur Verstellung des Ventilkörpers (5, 16, 24) ausgebildete Ventilwelle (7, 18, 23) mit einem die Membran (9, 20, 30) halternden Teller (10, 19, 29) verbunden ist.

4. Steuerventil nach zumindest einem der vorhergehenden Ansprüche, **dadurch gekennzeichnet**, daß das Druckausgleichselement (8) zur Unterteilung eines Behälters (12) in zwei Kammern (13, 14) gestaltet ist und daß die erste Kammer (13) mit dem ersten Druckraum (1) und die zweite Kammer (14) mit dem zweiten Druckraum (2) verbunden ist.

5. Steuerventil nach zumindest einem der vorhergehenden Ansprüche, **dadurch gekennzeichnet**, daß der Behälter (12) auf der dem zweiten Druckraum (2) gegenüberliegenden Seite des ersten Druckraums (1) angeordnet ist und daß ein Druckausgleichskanal (15) zur Verbindung des zweiten Druckraums (2) mit der zweiten Kammer (14) gestaltet ist.

6. Steuerventil nach zumindest einem der vorhergehenden Ansprüche, **dadurch gekennzeichnet**, daß der Ventilkörper (5) mittels eines Federelementes (11) in Schließstellung rückstellbar ist.

7. Steuerventil nach zumindest einem der vorhergehenden Ansprüche, **dadurch gekennzeichnet**, daß zwischen dem Ventilkörper (24) und dem Druckausgleichselement (26) ein Hebel (28) angeordnet ist.
